# EUROPEAN PATENT APPLICATION

(11) **EP 4 245 700 A1**
(43) Date of publication of application: **20.09.2023**
(21) Application number: 23161248.2
(22) Date of filing: 10.03.2023
(51) Int. Cl.: B65G 47/26, B65G 47/32, B65G 47/91

(54) **ARTICLE ACCUMULATING APPARATUS AND PACKING APPARATUS**

(30) Priority: 14.03.2022 JP 2022039255
(71) Applicant: Ishida Co., Ltd., Kyoto 606-8392 (JP)
(72) Inventor: IWASA, Takuya, Ritto-shi Shiga 520-3026 (JP); YOKOTA, Yuji, Ritto-shi Shiga 520-3026 (JP); SATA, Kohei, Ritto-shi Shiga 520-3026 (JP)
(74) Representative: Bardehle Pagenberg Partnerschaft mbB Patentanwälte Rechtsanwälte

(57) **Abstract**

An article accumulating apparatus includes a transport part configured to place and transport an article on a transporting surface, and a transfer part configured to suction and hold the article on the transporting surface and move it. The transfer part suctions and holds the article to be in an inclined state in which the downstream side of the article in a transporting direction of the transport part is inclined higher than the upstream side thereof, and moves the article in the inclined state downstream in the transporting direction.

## Description

### TECHNICAL FIELD

One aspect of the present invention relates to an article accumulating apparatus and a packing apparatus.

### BACKGROUND

An article accumulating apparatus that includes a transport part that places an article on a transporting surface and transports the article, and a transfer part that suctions and holds the article on the transporting surface and moves the article is known. As a technique of this kind, for example, in Japanese Unexamined Patent Publication No. 2018-103317, an apparatus that includes a suction device for suctioning and holding an article carried in by a carrying conveyor, and a robot on a movable distal end of which the suction device is mounted is described.

### SUMMARY

In the article accumulating apparatus described above, for example, a movement speed may be reduced in order to stably move the suctioned and held article. In this case, a processing capacity (corresponding to the number of articles that can be processed per unit time) may decrease.

An object of one aspect of the present invention is to provide an article accumulating apparatus and a box packaging device capable of increasing a processing capacity.

An article accumulating apparatus according to one aspect of the present invention includes a transport part configured to place and transport an article on a transporting surface, and a transfer part configured to suction and hold the article on the transporting surface and move it, wherein the transfer part suctions and holds the article in an inclined state in which a downstream side of the article in a transporting direction of the transport part is inclined higher than an upstream side thereof, and moves the article in the inclined state downstream in the transporting direction.

In the article accumulating apparatus, the article is suctioned and held in an inclined state in which the downstream side of the article in the transporting direction of the transport part is inclined higher than the upstream side thereof (hereinafter, simply referred to as an "inclined state"), and the article in the inclined state is moved downstream in the transporting direction. Therefore, the center of gravity of the article can be moved upstream in the conveying direction during the movement, and even when the movement of the suctioned and held article is accelerated, it is possible to suppress the influence of inertia and prevent, for example, the suctioned and held article from being unintentionally released or dropped. Therefore, the article can be stably moved at a high speed, and a processing capacity can be improved.

In the article accumulating apparatus according to one aspect of the present invention, the transfer part may include a robot including a movable distal end portion, and a suction part mounted on the movable distal end portion to suction and hold the article. In this case, the transfer part can be realized by a configuration including the robot and the suction part.

In the article accumulating apparatus according to one aspect of the present invention, the suction part may include a plurality of suction pads, and a lower end position of the suction pads on an upstream side in the transporting direction may differ from a lower end position of the suction pads on a downstream side in the transporting direction. In this case, it is possible to easily suction, hold, and move the article in the inclined state using such a plurality of suction pads.

In the article accumulating apparatus according to one aspect of the present invention, the robot may include a rotating part that rotates the suction part around an axis in a vertical direction. In this case, it is possible to easily realize suctioning and holding of the article in the inclined state by appropriately rotating the suction part with the rotating part.

In the article accumulating apparatus according to one aspect of the present invention, the transfer part may accumulate the one article in the inclined state such that the downstream side of the one article in the transporting direction overlaps another article that was previously moved. Normally, when one article is accumulated so that its downstream side overlaps with another article that was moved earlier (hereinafter also referred to as "overlapping accumulation"), due to the influence of inertia, one article tends to shift downstream (forward in a moving direction), and in some cases, one article may pass over another article. In this respect, according to one aspect of the present invention, since one article in the inclined state is accumulated to overlap another one, it is possible to stably achieve the overlapping accumulation and to suppress the influence of inertia during the overlapping accumulation.

In the article accumulating apparatus according to one aspect of the present invention, the transport part may include a first transport part including a first transporting surface, and a second transport part disposed downstream of the first transport part in the transporting direction and including a second transporting surface, the transfer part may move the article on the first transporting surface onto the second transporting surface, and the first transporting surface and the second transporting surface may be disposed along the same horizontal plane. Thus, compared to a case in which there is a step between the first transporting surface and the second transporting surface, it is possible to suppress the influence of inertia in the vertical direction that occurs when the article is moved from the first transporting surface to the second transporting surface.

In the article accumulating apparatus according to one aspect of the present invention, the article may be a bag body in which contents are accommodated in a bag. When the bag that is suctioned and held is moved, the movement tends to be unstable because the contents move inside the bag. Therefore, in this case, the effect that the article can be stably moved at a high speed is particularly effective.

A packing apparatus according to one aspect of the present invention includes the article accumulating apparatus described above. Also in the packing apparatus, the articles can be stably moved at a high speed, and the processing capacity can be improved.

According to one aspect of the present invention, it is possible to provide an article accumulating apparatus and a packing apparatus capable of increasing the processing capacity.

### BRIEF DESCRIPTION OF THE DRAWINGS

FIG. 1 is a schematic plan view showing a packing apparatus according to an embodiment.
FIG. 2 is a perspective view showing an article accumulating apparatus according to the embodiment.
FIG. 3 is a front view showing a suction part of FIG. 2.
FIG. 4A is a schematic front view for describing transfer of a bag body by a transfer unit. FIG. 4B is a schematic front view showing a continuation of FIG. 4A. FIG. 4C is a schematic front view showing a continuation of FIG. 4B. FIG. 4D is a schematic front view showing a continuation of FIG. 4C.
FIG. 5 is a schematic front view showing a plurality of bags accumulated to overlap each other.

### DETAILED DESCRIPTION

Hereinafter, an embodiment according to one aspect of the present invention will be described in detail with reference to the accompanying drawings. In each of the drawings, the same or corresponding parts are denoted by the same reference numerals, and redundant explanations will be omitted.

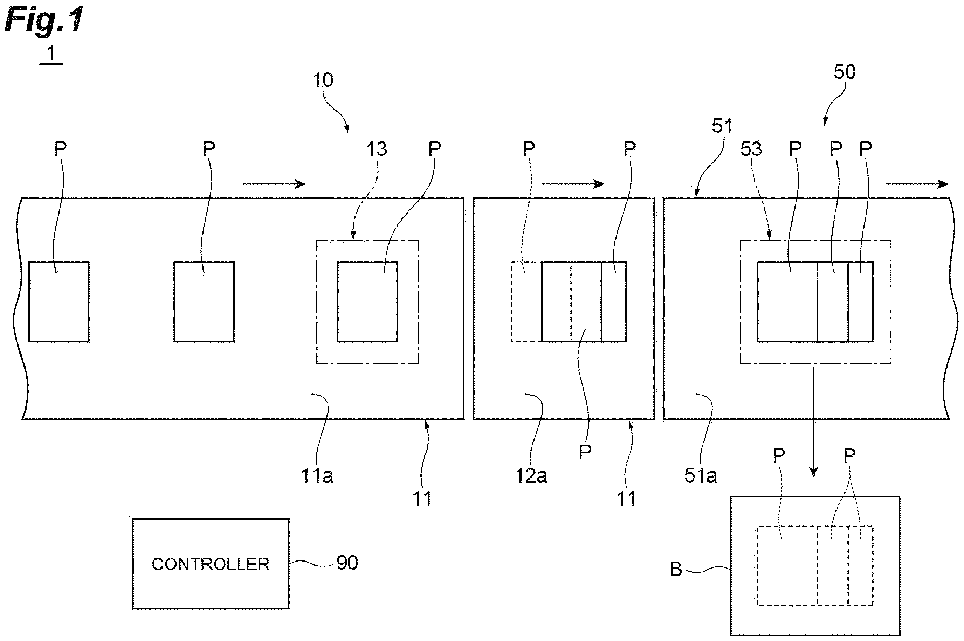

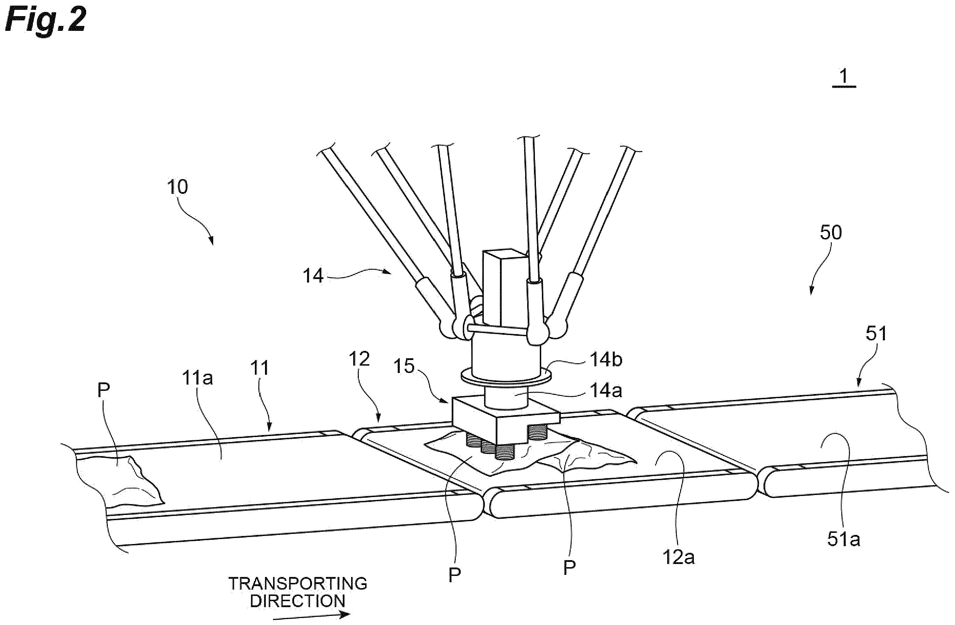

FIG. 1 is a schematic plan view showing a packing apparatus according to an embodiment. FIG. 2 is a perspective view showing an article accumulating apparatus according to the embodiment. As shown in FIGS. 1 and 2, the packing apparatus 1 is a device that accumulates a plurality of bag bodies (articles) P, stores the accumulated plurality of bag bodies P in a package B, and packs them. The bag body P is an article in which contents are accommodated in a bag. For example, the bag body P is a confectionery or the like wrapped in a soft packaging material. For example, the package B is cardboard or the like. The package B and the bag body P are not particularly limited, and various packages and bag bodies may be used.

The packing apparatus 1 includes an article accumulating apparatus 10, an article storage device 50 and a controller 90. The article accumulating apparatus 10 accumulates a plurality of bag bodies P carried in from the upstream side and carries them out to the downstream side. The article accumulating apparatus 10 includes an article conveyor (a first transport part) 11, an accumulation conveyor (a second transport part) 12 and a transfer unit (a transfer part) 13.

The article conveyor 11 includes a transporting surface (a first transporting surface) 11a. The article conveyor 11 is a transport part that transports the bag bodies P placed on the transporting surface 11a. The article conveyor 11 transports, for example, the bag bodies P after inspection, which are sequentially transported from the upstream side, toward the downstream side. A belt conveyor, for example, is used as the article conveyor 11.

The accumulation conveyor 12 includes a transporting surface (a second transporting surface) 12a. The accumulation conveyor 12 is a transport part that transports the bag bodies P placed on the transporting surface 12a. The accumulation conveyor 12 is disposed to continue downstream of the article conveyor 11. The accumulation conveyor 12 intermittently transports the plurality of bag bodies P transferred from the article conveyor 11 by the transfer unit 13 to the downstream side in the same transporting direction as the article conveyor 11. A belt conveyor, for example, is used as the accumulation conveyor 12. The transporting surface 11a and the transporting surface 12a are disposed along the same horizontal plane, and no step is formed therebetween.

The transfer unit 13 suctions and holds one bag body P on the transporting surface 11a and moves it onto the transporting surface 12a. The transfer unit 13 includes a robot 14 including a movable distal end portion 14a, and a suction part 15 mounted on the movable distal end portion 14a to suction and hold the bag body P. The robot 14 is a parallel link robot having a well-known construction. The robot 14 includes a plurality of swing arms, servomotors and links. The robot 14 three-dimensionally moves the movable distal end portion 14a within a predetermined movable range. The suction part 15 is detachably mounted on the movable distal end portion 14a. The robot 14 includes a rotating part 14b that rotates the suction part 15 mounted on the movable distal end portion 14a about an axis along a vertical direction. Various rotating mechanisms can be used as the rotating part 14b.

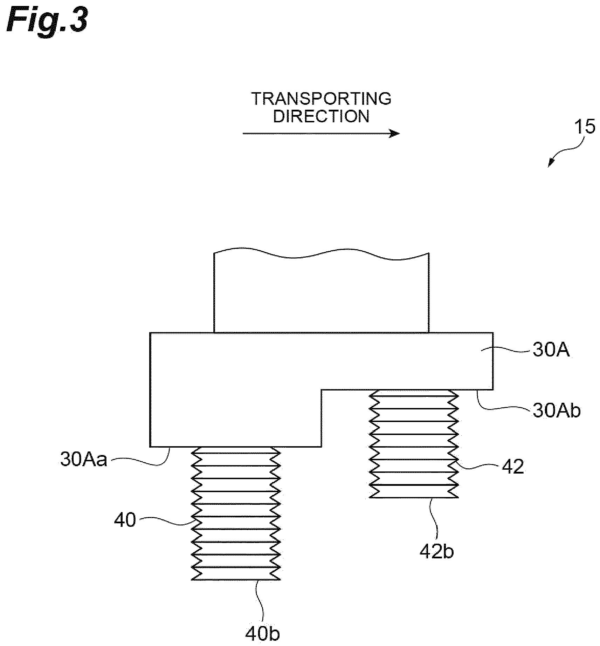

As shown in FIGS. 2 and 3, the suction part 15 includes a head part 30A, a first suction pad 40 and a second suction pad 42. The head part 30A is connected to a blower (not shown). The head part 30A has a first mounting surface 30Aa on which the first suction pad 40 is mounted, and a second mounting surface 30Ab on which the second suction pad 42 is mounted. The first mounting surface 30Aa on the upstream side in the transporting direction is located vertically below the second mounting surface 30Ab on the downstream side in the transporting direction. A plurality of first suction pads 40 are disposed on the upstream side of the head part 30A in the transporting direction. A plurality of second suction pads 42 are disposed on the downstream side of the head part 30A in the transporting direction.

Each of the first suction pads 40 and the second suction pads 42 is connected via a valve to a duct connected to the head part 30A. In the first suction pads 40 and the second suction pads 42, suction and holding of the bag body P (picking-up from the article conveyor 11) and release of the suction of the bag body P (release to the accumulation conveyor 12) are performed by opening and closing the valves. Each of the first suction pads 40 and the second suction pads 42 has elasticity. The first suction pad 40 is longer than the second suction pad 42. A lower end position of the first suction pad 40 differs from a lower end position of the second suction pad 42.

A suction port 40b provided at the lower end of the first suction pad 40 is located vertically below a suction port 42b provided at the lower end of the second suction pad 42. Thus, due to the suction port 40b of the first suction pad 40 being disposed lower than the suction port 42b of the second suction pad 42, it is possible to easily achieve an inclined state in which the bag body P is inclined such that the downstream side in the transporting direction is higher (the upstream side in the transporting direction is lower) when the suction part 15 suctions and holds the bag body P (details will be described later).

The article storage device 50 moves the plurality of bag bodies P accumulated by the article accumulating apparatus 10 to the package B and stores them therein. The article storage device 50 includes a transport conveyor 51 and a transfer unit 53. The transport conveyor 51 includes a transporting surface 51a. The transport conveyor 51 is a transport part that transports the plurality of bag bodies P placed on the transporting surface 51a. The transport conveyor 51 is disposed to be connected to the downstream side of the accumulation conveyor 12. The transport conveyor 51 transports the plurality of bag bodies P transported by the accumulation conveyor 12 downstream in the same transporting direction as that of the accumulation conveyor 12. A belt conveyor, for example, is used as the transport conveyor 51. The transporting surface 12a and the transporting surface 51a are disposed along the same horizontal plane, and no step is formed therebetween. The transfer unit 53 suctions and holds the plurality of bag bodies P on the transporting surface 51a and moves them into the package B. The transfer unit 53 is configured similarly to the transfer unit 13.

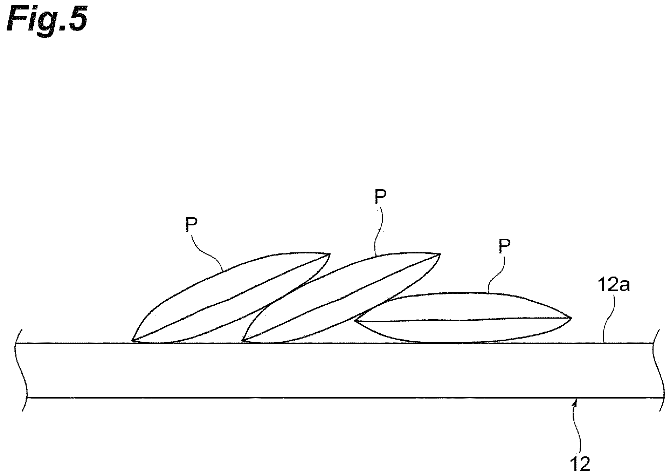

The controller 90 includes memories such as ROM and RAM in addition to a CPU (not shown). Various inputs are input to the controller 90 via an operation panel. The controller 90 controls various devices in the packing apparatus 1 by executing a program stored in the memory by the CPU. Functions of the controller 90 may be realized by either software or hardware, or may be realized by cooperation thereof. The controller 90 accumulates the plurality of bag bodies P (hereinafter, also referred to as "overlapping accumulation" or "sashimi accumulation") by controlling the transfer by the transfer unit 13 and the transportation by the accumulation conveyor 12, such that the downstream side of one bag body P in the transporting direction overlaps another bag body P that was previously moved on the transporting surface 12a of the accumulation conveyor 12 (refer to FIG. 5).

In this embodiment, the transfer unit 13 is controlled by the controller 90 to suction and hold the bag body P in the inclined state in which the downstream side in the transporting direction is higher than the upstream side, and then to move the bag body P in the inclined state to the downstream side in the transporting direction. In other words, the transfer unit 13 suctions and holds the bag body P in the inclined state in which the upstream side of the bag body P in the transporting direction is lower than the downstream side, and moves the bag body P in the inclined state to the downstream side in the transporting direction. Hereinafter, such an inclined state is also simply referred to as a "downstream upward inclined state." The upward inclined state on the downstream side downstream is a state in which the front side of the bag body P in a moving direction is inclined higher than the rear side (the rear side is lower than the front side). The downstream upward inclined state is a posture in which the downstream side in the transporting direction (the front side in the moving direction) floats with respect to a horizontal posture.

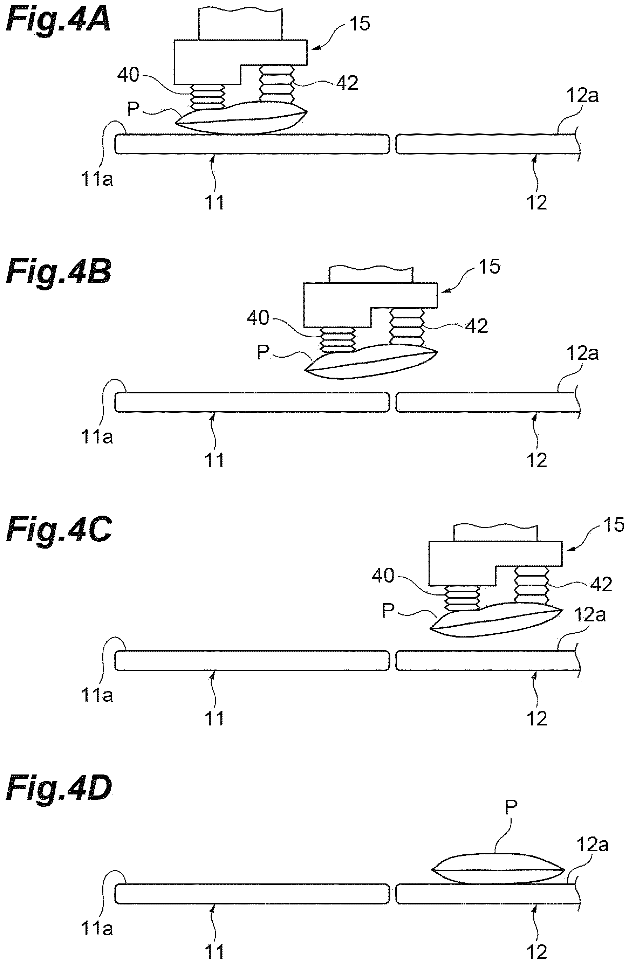

Next, an example in which the bag body P is transferred in the downstream upward inclined state will be described with reference to FIG. 4.

First, as shown in FIG. 4A, the suction part 15 of the transfer unit 13 is moved vertically above the bag body P that is being placed and transported on the transporting surface 11a of the article conveyor 11. The suction part 15 is moved down toward the bag body P and brought into contact therewith, and thus the bag body P is suctioned and held by the suction part 15. At this time, the first suction pad 40 of the suction part 15 first comes into contact with an end portion of the bag body P on the upstream side in the transporting direction.

Subsequently, as shown in FIG. 4B, the suction part 15 is moved up and accelerated toward the accumulation conveyor 12, and thus the suction part 15 is moved downstream in the transporting direction. At this time, the bag body P moves downstream in the transporting direction in the downstream upward inclined state. The center of gravity of the bag body P in the downstream upward inclined state moves to the upstream side in the transporting direction, and its behavior is stable and is not shaken.

Subsequently, as shown in FIG. 4C, the suction part 15 is decelerated, and thus the suction part 15 is moved to a specified position on the transporting surface 12a of the accumulation conveyor 12. At this time, the bag body P in the downstream upward inclined state maintains the inclined state, and its behavior is stable and is not shaken. Finally, the suction part 15 is moved down, and the suction of the bag body P is released. Thus, as shown in FIG. 4D, the transfer of the bag body P onto the transporting surface 12a of the accumulation conveyor 12 is completed.

In this embodiment, since the plurality of bag bodies P are accumulated to overlap each other, the transfer of the first bag body P is completed, and then the accumulation conveyor 12 is driven by a very small amount to convey the first bag body P to the downstream side by a very small amount. Then, for the plurality of bag bodies P, the above-described transfer and the above-described very small amount of transportation by the accumulation conveyor 12 are repeated. Thus, the bag body P in the inclined state is accumulated so that the downstream side thereof in the transporting direction overlaps the bag body P that was previously moved, and thus the overlapping accumulation is achieved (refer to FIG. 5). In the overlapping accumulation, since the center of gravity of the second and subsequent bag bodies P is in contact with the accumulation conveyor 12, accumulation does not collapse or become disordered during transportation.

As described above, the article accumulating apparatus 10 suctions and holds the bag body P in the downstream upward inclined state, and moves the bag body P in the downstream upward inclined state in the transporting direction. Thus, when the bag body P is moved downstream in the transporting direction, the center of gravity of the article accumulating apparatus 10 can be moved to the upstream side in the transporting direction, and thus even when the movement of the suctioned and held bag body P is accelerated, it is possible to prevent, for example, the suctioning and holding of the bag body P from being unintentionally released or the bag body P from being dropped by suppressing an influence of inertia. Therefore, the bag body P can be stably moved at a high speed, and the processing capacity can be enhanced.

In the article accumulating apparatus 10, the transfer unit 13 includes the robot 14 including the movable distal end portion 14a, and the suction part 15 mounted on the movable distal end portion 14a. In this case, the transfer unit 13 can be realized by a configuration including the robot 14 and the suction part 15.

In the article accumulating apparatus 10, the suction part 15 includes the plurality of first suction pads 40 and second suction pads 42. The lower end position of the first suction pad 40 on the upstream side in the transporting direction differs from the lower end position of the second suction pad 42 on the downstream side in the transporting direction. It is possible to easily suction, hold and move the bag body P in the downstream upward inclined state using the suction part 15 including the plurality of first suction pads 40 and the second suction pads 42.

In the article accumulating apparatus 10, the robot 14 includes a rotating part 14b that rotates the suction part 15. In this case, it is possible to easily realize the suctioning and holding of the bag body P in the downstream upward inclined state by appropriately rotating the suction part 15 with the rotating part 14b.

Incidentally, usually, when a plurality of bag bodies P are accumulated to overlap each other, the bag bodies P tend to shift downstream due to the influence of inertia, and in some cases, the bag body P to be accumulated may pass over another bag body P that has already been transferred. In this regard, in the article accumulating apparatus 10, since the bag bodies P in the downstream upward inclined state are accumulated to overlap each other, it is possible to realize stable accumulation and to suppress the influence of inertia during the overlapping accumulation.

The article accumulating apparatus 10 includes the article conveyor 11 including the transporting surface 11a, and the accumulation conveyor 12 including the transporting surface 12a. The transfer unit 13 moves the bag bodies P on the transporting surface 11a onto the accumulation conveyor 12, and the transporting surfaces 11a and 12a are disposed along the same horizontal plane. Thus, as compared with a case in which the transporting surface 11a and the transporting surface 12a have a step therebetween, it is possible to suppress the influence of inertia in the vertical direction (suction error, or the like) that occurs when the bag body P is moved from the transporting surface 11a to the transporting surface 12a.

In the article accumulating apparatus 10, the bag body P is a target article. When the bag body P that is suctioned and held is moved, the movement tends to be unstable because the contents move inside the bag body. Therefore, in this case, the effect in which the bag body P is stably moved at a high speed is particularly effective.

The packing apparatus 1 includes the article accumulating apparatus 10 described above. Also in the packing apparatus 1, the bag bodies P can be stably moved at a high speed, and the processing capacity can be enhanced. In this embodiment, the downstream side of each of the bag bodies P is held higher than the upstream side thereof, and the center of gravity of the bag bodies P is gathered to the upstream side, so that even when the bag bodies are moved at a high speed, they can be accurately accumulated to overlap each other. In this embodiment, for example, the processing capacity of a sealed bag article containing 70 g of chocolate can be increased from 90 bpm to 110 bpm. In this embodiment, the contents of the bag body P are not particularly limited, and may be, for example, candies and biscuits.

Although the embodiment has been described above, one aspect of the present invention is not limited to the above embodiment. One aspect of the present invention can be further modified without departing from the gist thereof.

In the above embodiment, a belt conveyor is used as the transport part, but other transporting devices may be used. In the above-described embodiment, the specific configuration of the suction part 15 is not particularly limited as long as it can be adsorbed and held in a downstream upward inclined state. In the above embodiment, the robot 14 may be an articulated robot with a multi-axis configuration instead of the parallel link robot. In the above-described embodiment, as the accumulation form of the bag bodies P, not only overlapping accumulation but also accumulation forms such as a swastika shape and a square cross shape can be employed.

## Claims

1. An article accumulating apparatus comprising:
a transport part configured to place and transport an article on a transporting surface; and
a transfer part configured to suction and hold the article on the transporting surface and move it,
wherein the transfer part suctions and holds the article in an inclined state in which a downstream side of the article in a transporting direction of the transport part is inclined higher than an upstream side thereof, and moves the article in the inclined state downstream in the transporting direction.

2. The article accumulating apparatus according to claim 1, wherein the transfer part includes a robot including a movable distal end portion, and a suction part mounted on the movable distal end portion to suction and hold the article.

3. The article accumulating apparatus according to claim 2, wherein:
the suction part includes a plurality of suction pads, and
a lower end position of the suction pads on an upstream side in the transporting direction differs from a lower end position of the suction pads on a downstream side in the transporting direction.

4. The article accumulating apparatus according to claim 2 or 3, wherein the robot includes a rotating part that rotates the suction part around an axis in a vertical direction.

5. The article accumulating apparatus according to claim 1 or 2, wherein the transfer part accumulates the one article in the inclined state such that the downstream side of the one article in the transporting direction overlaps another article that was previously moved.

6. The article accumulating apparatus according to any one of claims 1 to 5, wherein:
the transport part includes a first transport part including a first transporting surface, and a second transport part disposed downstream of the first transport part in the transporting direction and including a second transporting surface,
the transfer part moves the article on the first transporting surface onto the second transporting surface, and
the first transporting surface and the second transporting surface are disposed along the same horizontal plane.

7. The article accumulating apparatus according to any one of claims 1 to 6, wherein the article is a bag body in which contents are accommodated in a bag.

8. A packing apparatus comprising the article accumulating apparatus according to any one of claims 1 to 6.
